**Europäisches Patentamt**

**European Patent Office**

**Office européen des brevets**

(19)

(11) Veröffentlichungsnummer : **0 360 027 B1**

(12) ## EUROPÄISCHE PATENTSCHRIFT

(45) Veröffentlichungstag der Patentschrift :
**04.03.92 Patentblatt 92/10**

(51) Int. Cl.$^5$ : **B60J 10/08**

(21) Anmeldenummer : **89115658.0**

(22) Anmeldetag : **25.08.89**

(54) **Dichtungsanordnung.**

(30) Priorität : **29.08.88 DE 3829210**

(43) Veröffentlichungstag der Anmeldung :
**28.03.90 Patentblatt 90/13**

(45) Bekanntmachung des Hinweises auf die
Patenterteilung :
**04.03.92 Patentblatt 92/10**

(84) Benannte Vertragsstaaten :
**DE ES FR GB IT SE**

(56) Entgegenhaltungen :
**US-A- 3 042 980**
**US-A- 3 449 864**
**US-A- 3 656 260**

(73) Patentinhaber : **Gebr. Happich GmbH**
**Postfach 10 02 49 Clausenbrücke 1**
**W-5600 Wuppertal 1 (DE)**

(72) Erfinder : **Neukirchen, Dieter**
**Sebastianusstrasse 23**
**W-4049 Rommerskirchen (DE)**
Erfinder : **Marcus, Armin**
**Zedernweg 1**
**W-5600 Wuppertal 1 (DE)**

EP 0 360 027 B1

Jouve, 18, rue Saint-Denis, 75001 PARIS

## Beschreibung

Die Erfindung bezieht sich auf eine Dichtungsanordnung für den Spalt zwischen einem eine Ausnehmung im Aufbau eines Fahrzeugs begrenzenden Rahmen und einer an diesem mittels mindestens eines Scharniers schwenkbar angelenkten Abdeckung, insbesondere Tür, unter Verwendung einer aus Gummi oder Kunststoff bestehenden Dichtprofilleiste, die an einem der beiden den Spalt begrenzenden Teile befestigt ist und einen relativ hart ausgebildeten Verankerungs- oder Befestigungskörper sowie zumindest einen damit verbundenen relativ weich und elastisch ausgebildeten " Dichtkörper aufweist, welcher dicht verschlossen ist, über einen mit einer Druckquelle verbundenen Luftanschluß verfügt und bei geschlossener Abdeckung derart aufblasbar ist, daß er gegen eine am anderen Teil vorgesehene Dichtfläche gepreßt wird. Dabei ist insbesondere an eine Dichtungsanordnung für den Spalt zwischen Fahrzeugseitentüren und den diese umgebenden Rahmen, vornehmlich an eine Dichtungsanordnung für den in Fahrtrichtung vor einer Seitentür eines Fahrzeugs liegenden Spalt zwischen der Seitentür und einer Windschutzscheibensäule gedacht. Jedoch soll die Dichtungsanordnung auch überall dort zur Anwendung gelangen können, wo ein Spalt zwischen einer Abdeckung z. B. in Form einer Klappe, Haube od. dgl. und dem Rahmen der entsprechenden Ausnehmung einer besonders zuverlässigen Abdichtung bedarf. Die vorliegende Erfindung geht aus von einem durch die DE-A-14 30 936 und DE-A- 30 46 459 repräsentierten Stand der Technik.

Zur näheren Darlegung der Bedeutung der vorliegenden Erfindung soll zunächst auf den bevorzugten Anwendungsfall derselben eingegangen werden, bei dem es auf die Abdichtung des scharnierseitigen Spalts zwischen einer Fahrzeugseitentür und dem eine Öffnung im Fahrzeugaufbau begrenzenden Rahmen, oberhalb der Fahrzeuggürtellinie ankommt. Bei der Vordertür eines Fahrzeugs, beispielsweise eines Personenkraftfahrzeuges treten in dem in der Höhe der Windschutzscheibe des Fahrzeugs liegenden Bereich des Türspalts, insbesondere beim Fahren mit höheren Geschwindigkeiten Geräusche auf, die ihre Ursache in der Druckverteilung auf der Außenhaut des Fahrzeugs haben. Wie Untersuchungen gezeigt haben, ist die Differenz zwischen dem Druck im Fahrzeuginnern und dem Druck außerhalb des Fahrzeugs im Bereich der Windschutzscheibensäulen besonders groß, wobei ein vielfacher Wert des am übrigen Umfang der Tür auftretenden Differenzdrucks unmittelbar hinter der Windschutzscheibensäule gemessen wurde. Durch diese große Druckdifferenz kommt es zur Verformung der Tür in diesem Bereich, wodurch die Dichtwirkung der hier üblicherweise verwendeten Dichtungen verloren geht. Auch sucht sich unter dem Einfluß dieses Differenzdrucks eine Strömung aus dem Fahrzeuginnern heraus auszubilden. Die Wirkung der beim Fahren auftretenden Druckdifferenzen können störende und bei längeren Fahrten den Fahrer ermüdende Windgeräusche zur Folge haben.

Es bleibt zudem festzustellen, daß sich bei Fahrzeugen, insbesondere aerodynamisch optimierten Fahrzeugen durch weniger Luft-Strömungs-Ablösungen, insbesondere im Windschutzsäulen-Dach- und Seitenbereich, oberhalb der Fahrzeuggürtellinie, extrem hohe Strömungs-Geschwindigkeiten und Unterdrücke einstellen. Die Folge sind u. a., wie schon weiter oben erwähnt, aus der Druckdifferenz zum Fahrzeug-Innenraum resultierende Kräfte, die zu einem Abheben von Türscheibe und/oder Fensterrahmen von der Karosserie-Dichtfläche führen können und extreme Geräusch-Entwicklung bei Überströmung von vorstehenden Kanten und vorhandenen oder durch Abheben der Tür entstehenden Spalten. Die Geräusche wirken besonders störend, da der Gesamtgeräuschpegel moderner Fahrzeuge immer weiter abnimmt und die Komfort-Ansprüche der Fahrzeugbenutzer weiter steigen.

Dichtsysteme für aerodynamisch optimierte Fahrzeuge sind in Form von relativ aufwendigen Mehrfach-Dichtungen bereits serienmäßig realisiert. Es handelt sich hier immer um Dichtsysteme mit äußerer Spaltdichtung (an flexibler Fensterführung, Dachleiste oder separates Teil) und weit innen liegender Hauptdichtung. Bei einigen Fahrzeugen wird noch eine dritte Dichtung dazwischen angeordnet. Diese bekannten Dichtsysteme sind relativ aufwendig in der Herstellung und Montage und stellen noch keine befriedigende Lösung dar. Dabei ist auch zu berücksichtigen, daß ein ausreichender Dichtungsdruck auch unter extremen Bedingungen gewährleistet sein soll (was in der Praxis, wie weiter oben geschildert, in der Regel nicht erreicht wird). Da dieser Dichtungsdruck bei herkömmlichen Dichtungen allein von deren Geometrie und Material bestimmt wird, nimmt der dem Schließen der Fahrzeugtür entgegenstehende Druck zwangsläufig zu. Gleichzeitig wirken sich zwei weitere Faktoren negativ auf den Schließkomfort aus: Der beim Zuschlagen der Tür im Fahrzeug entstehende Luftdruckimpuls und die bei Leichtbautüren hierbei geringere aufbringbare kinetische Energie. Die Fahrzeugtür läßt sich bei Verwendung herkömmlicher Dichtsysteme daher schwer schließen, federt oft wieder auf und führt damit auch zu Umweltbelästigung durch hohe Geräuschentwicklung.

Neben den erwähnten Dichtsystemen sind auch solche mit aufblasbaren Hohlkammern bekannt, von denen sich aber noch keines für den Serieneinsatz durchsetzen konnte. Beispielsweise beschreibt die DE-A-14 30 936 eine Vorrichtung zum Abdichten der Tür von Fahrzeugen mit einem zwischen die abzudichtenden Teile eingesetzten Dichtprofil aus elastischen Material, wobei als Dichtprofil ein Hohlprofil vorgesehen ist, welches bei fahrendem Fahrzeug einen höheren Druck in seinem Innenraum aufweist, als bei stehendem Fahrzeug. Das Hohlprofil soll dabei bei fahrendem Fahrzeug mit Druck beaufschlagt werden, so daß es zwischen die abzudichtenden Teile gepreßt, dagegen bei stehendem Fahrzeug drucklos oder sogar durch Unterdruck zusammengezogen wird. Wie Versuche gezeigt haben, kann dieses bekannte Dichtsystem den technischen Anforderungen nicht genügen, und zwar in erster Linie deshalb nicht, weil das Hohlprofil, im unter erhöhten Innendruck versetzten Zustand, senkrecht zur Türebene wirkt und damit ein Abheben der Tür bei hoher Geschwindigkeit noch unterstützt. Ein weiterer Nachteil des bekannten Dichtsystems nach der genannten DE-A-14 30 936 besteht darin, daß ein relativ großvolumiges Hohlprofil eingesetzt werden muß, um alle Toleranzen und Einbauzustände zu erfassen. Hierdurch wird der Aufwand und die Gefahr der Faltenbildung in Radienbereichen beträchtlich erhöht und zudem ein enormes Luftvolumen zum Aufblasen des Hohlprofils benötigt. Die vorstehend beschriebenen Nachteile liegen in ebensolcher Weise auch bei einem Dichtsystem vor, wie es in der DE-A-30 46 459 beschrieben wird.

Eine verbesserte, den technischen Anforderungen aber immer noch nicht genügende Abdichtung wie Dichtleiste oder Schlauchdichtung mit zumindest einem in dessen Längsrichtung sich erstreckenden Hohlraum für verschließbare Öffnungen von vorzugsweise Fahrzeugen, bei der der Druck in dem Hohlraum in gewünschtem Umfange einstellbar sein soll, ist in der EP-A- 0 236 726 gezeigt. Im Ausführungsbeispiel nach Fig. 2 dieser Druckschrift ist gezeigt und in Spalte 4, Zeilen 11 bis 14 derselben ist beschrieben, daß durch einen Überdruck in der Schlauchdichtung eine in Richtung der Ebene der Tür hervorgerufene Kraftbeaufschlagung hervorgerufen wird. Es ist zwar glaubhaft, daß der Gegenstand nach der EP-A- 0 236 726 eine gegenüber den vorbeschriebenen Dichtsystemen verbesserte Abdichtung zu gewährleisten vermag, hingegen nicht zu erwarten, daß die Tür lediglich durch Überdruck in der Schlauchleitung am Abheben bei hoher Geschwindigkeit gehindert werden kann; denn hierfür müßten schon ein enormer Überdruck und eine entsprechend große Reibungskraft aufgebaut werden, womit aber das mit vertretbaren Kosten einsetzbare Material überfordert sein dürfte. Im übrigen muß auch bei dieser bekannten Abdichtung, um alle Toleranzen und Einbauzustände zu erfassen, eine relativ großvolumige Schlauchleitung eingesetzt werden.

Ausgehend von einer Dichtungsanordnung der eingangs genannten Art liegt der vorliegenden Erfindung hiernach die Aufgabe zugrunde, Vorsorge dafür zu treffen, daß eine Abdeckung, insbesondere Tür, mit geringen Schließkräften schließbar ist, und die Dichtprofilleiste mit einem Dichtkörper auszubilden, der durch kleinvolumige Abmessungen ein nur geringes Luftvolumen für eine zuverlässige Abdichtung benötigt und daher mit geringem Aufwand und in relativ kurzer Zeit mit variierbarem Druck beaufschlagbar und wieder entlüftbar ist, und die Dichtprofilleiste so zu gestalten, daß bei etwaigem Druckabfall eine Notdichtfunktion sichergestellt ist und, weiterhin so zu gestalten, daß sie, ohne die Dichtfunktion beeinträchtigende Faltenbildung auch um relativ kleine Radien herum biegbar ist, und schließlich so zu gestalten, daß sie eine Abdeckung, insbesondere eine Tür im Fahrbetrieb standsicher zu halten vermag, wobei sich die Dichtungsanordnung darüber hinaus noch durch eine einfache und kostengünstige Herstellung und Montage auszeichnen soll.

Erfindungsgemäß ist zur Lösung dieser Aufgabe vorgesehen, daß der Verankerungs- oder Befestigungskörper ein im wesentlichen L-förmiges Querschnittsprofil aufweist, dessen kurzer Schenkel eine Spaltabdecklippe bildet, daß der Dichtkörper weitgehend verborgen und damit gegen mechanische Beschädigung geschützt hinter der Spaltabdecklippe angeordnet ist und aus einem Verbindungssteg besteht, von dem der erste Längsrand am freien Endbereich der Spaltabdecklippe und der zweite Längsrand an der Basis des Verankerungs- oder Befestigungskörpers, von der Spaltabdecklippe beabstandet und unter Bildung eines Hohlraums mit angenähert dreieckförmiger Querschnittsöffnung angeordnet ist, und daß dem Verbindungssteg eine am anderen Teil vorgesehene Profilierung mit einer rückseitig von einem Materialsteg begrenzten Hohlkehle gegenübersteht, in die der Dichtkörper einzugreifen vermag, wenn der Hohlraum mit Überdruck beaufschlagt wird, um durch den Dichtkörperdruck die Abdeckung (Tür) in Richtung Schließstellung zu belasten.

Die besonderen Vorteile der Erfindung bestehen in erster Linie darin, daß nunmehr wesentlich geringere Kräfte beim Schließen einer Abdeckung, insbesondere Tür, als es bisher in der Praxis der Fall war, aufzubringen sind und daß das Problem der Undichtigkeit und der enormen Geräuschentwicklung in kritischen Abdeckungs- oder Türbereichen vollständig eliminiert werden konnte. Die verringerten Schließkräfte ergeben sich dadurch, daß der Dichtkörper im nichtaufgeblasenen Zustand keine Rückstellkräfte verursacht und die Eliminierung der bisherigen Undichtigkeits- und Geräuschblastungs-Probleme erklärt sich daraus, daß zwischen dem Dichtkörper und der am jeweils anderen Teil vorgesehenen Profilierung ein Formschluß aufbaubar ist, der z.B. eine Tür im Fahrbetrieb absolut standsicher zu halten vermag. Durch die Maßnahme, den Verankerungs- oder Befestigungskörper mit einer randseitigen, längsdurchlaufenden Spaltabdecklippe auszubilden, wird zweierlei erreicht, und zwar zum einen eine Notdichtfunktion, indem auch bei etwaigem evakuiertem Dichtkörper z. B. Regenwasser nicht ohne weiteres in den Spalt eindringen kann, und zum anderen ist ein Schutz gegen mechanische Beschädigung des Dichtkörpers geschaffen. Der Verankerungs- oder Befestigungskörper ist an der Bildung des Dichtkörpers nunmehr unmittelbar beteiligt, so daß der Dichtkörper nicht mehr aus einem Schlauchprofil sondern aus einem Verbindungssteg besteht. Gleichzeitig wird verhindert, daß der Dichtkörper aus dem abzudichtenden Spalt nach außen herausgequetscht werden kann, d.h. der Dichtkörper kann sich beim Aufblasen nur in gewollter Richtung, nämlich schräg nach innen zur Türebene ausdehnen.

Eine bevorzugte Weiterbildung der Erfindung besteht darin, daß der Verbindungssteg mit mindestens einer längsdurchlaufenden, in den Hohlraum eindringenden Falte oder Hohlkehle ausgebildet ist. Hierdurch wird die Dehnung des Dichtkörpermaterials in Grenzen gehalten, woraus wiederum ein geringerer Druckbedarf einerseits und eine höhere Lebensdauer andererseits resultiert.

Der Dichtkörper kann mit dem Verankerungs- oder Befestigungskörper durch Kleben, Schweißen oder Vulkanisieren stoffschlüssig verbunden sein. Bevorzugterweise ist aber die Dichtprofilleiste als einstückiges Koextrusionsprofil ausgebildet.

Wie Versuche gezeigt haben, besteht eine besonders günstige Dichtungsanordnung dann, wenn sich bei seitlichen Fahrzeugtüren die Dichtprofilleiste von der Windschutzscheibensäule bis zur Heckscheibensäule, oberhalb der Schloß-Scharnier-Achse durchlaufend erstreckt, wobei der z.B. mit der Druckleitung einer Zentralverriegelung in Verbindung stehende Luftanschluß im Bereich der Fahrzeugmittensäule mit dem Dichtkörper verbunden ist.

Eine andere Lösung der Dichtungsanordnung kann darin bestehen, daß bei einer Seitentür die Türstirnfläche umlaufend die Dichtprofilleiste trägt und das Rahmenblech umlaufend mit der Gegenprofilierung versehen ist, wobei der Luftanschluß im Scharnierbereich mit dem Dichtkörper verbunden ist und wobei die Dichtprofilleistenenden gegeneinandergesetzt und z.B. über eine Stoßvulkanisationsstelle dicht miteinander verbunden sind.

Bei einer weiteren bevorzugten Lösung der Dichtungsanordnung ist hingegen vorgesehen, daß bei einer Seitentür das Rahmenblech umlaufend die Dichtprofilleiste, deren Enden dicht miteinander verbunden sind, trägt und die Türstirnfläche umlaufend mit der Gegenprofilierung versehen ist.

Ausführungsbeispiele der Erfindung werden im folgenden anhand der Zeichnungen näher erläutert. Es zeigen

Fig. 1 den seitlichen Bereich eines Personenkraftwagens mit einer vorderen und einer hinteren Seitentür,
Fig. 2 die Dichtprofilleiste für eine Dichtungsanordnung am seitlichen Bereich des Personenkraftwagens nach Fig. 1,
Fig. 3 einen Schnitt durch eine Dichtungsanordnung etwa folgend der Linie A-A in Fig. 1,
Fig. 4 eine seitliche Fahrzeugtüranordnung mit einer am Türrahmen angeordneten Dichtprofilleiste und
Fig. 5 eine seitliche Fahrzeugtüranordnung mit einer an der Fahrzeugtür angeordneten Dichtprofilleiste.

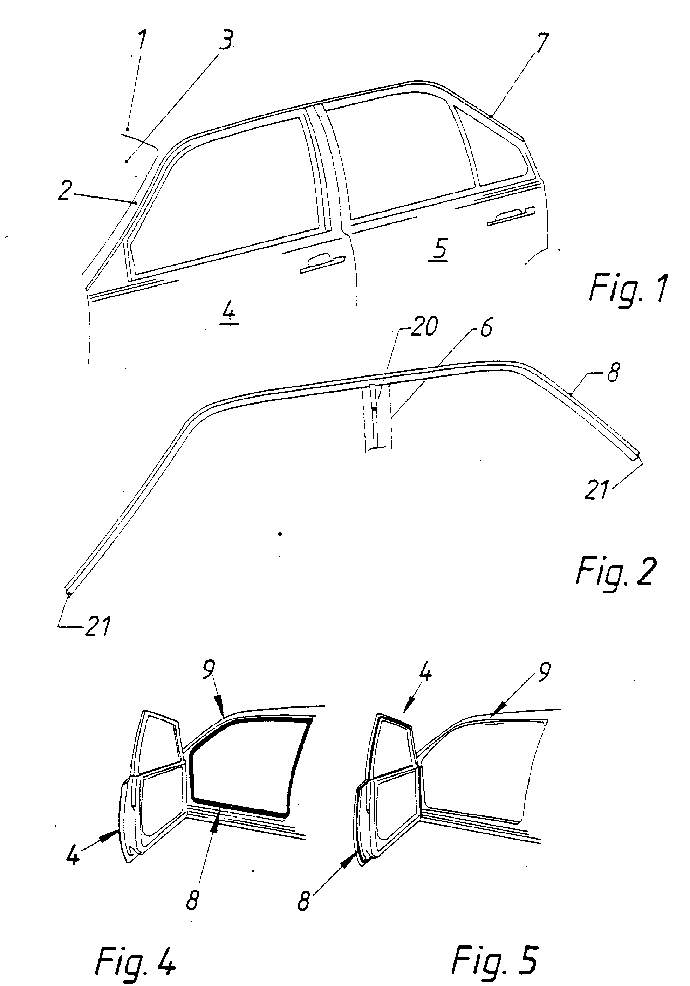

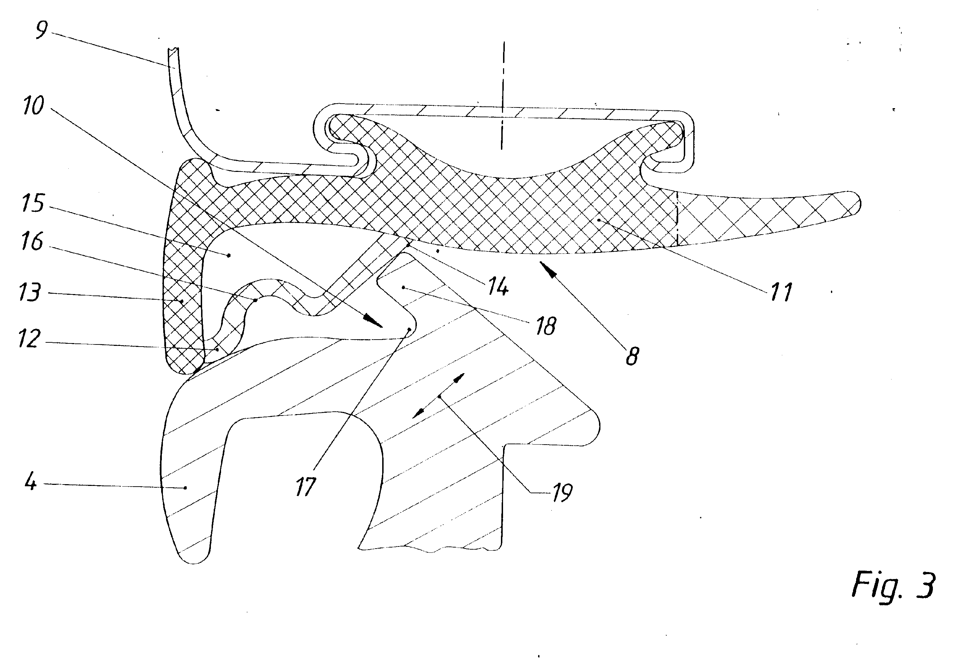

Von dem Fahrzeugaufbau nach Fig. 1 sind lediglich die Dachpartie 1, die Windschutzscheibensäule 2, die Windschutzscheibe 3, die vordere Seitentür 4 sowie die hintere Seitentür 5 wiedergegeben. Zum hier interessierenden Fahrzeugaufbau gehören noch eine in Fig. 2 gestrichelt angedeutete Fahrzeugmittensäule 6 sowie - bei 7 - eine durch die hintere Seitentür 5 verdeckte Heckscheibensäule.

Wie weiter oben dargelegt, stellen sich insbesondere im Windschutzscheibensäulen-Dach- und Seitenbereich, oberhalb der Fahrzeuggürtellinie extrem hohe Strömungs-Geschwindigkeiten und Unterdrücke ein, wobei die Differenz zwischen Innen- und Außendruck in Höhe der Windschutzscheibensäule 2 ein deutlich ausgeprägtes Maximum besitzt. Insbesondere dieser Bereich bedarf einer speziellen Abdichtung.

In Fig. 3 ist nun die neue Dichtungsanordnung in einem praktischen Anwendungsbeispiel gezeigt. Die Dichtungsanordnung umfaßt eine Dichtprofilleiste 8, die an der Abdeckung oder Tür 4, 5 oder zweckmäßigerweise am Rahmen 9 angeordnet ist und im letzteren Fall mit einer stirnseitigen Profilierung 10 der Abdeckung oder Tür 4, 5 zusammenwirkt.

Die Dichtprofilleiste 8 besteht aus Gummi oder Kunststoff und weist einen relativ hart ausgebildeten Verankerungs- oder Befestigungskörper 11 sowie eine damit verbundenen, relativ weich und elastisch ausgebildeten Dichtkörper 12 auf. Der Verankerungs- oder Befestigungskörper 11 besteht z.B. aus Gummi. EPDM (85 ± 5) Shore A und der Dichtkörper 12 z.B. aus Gummi: EPDM (40 ± 5) Shore A. Im dargestellten Ausführungsbeispiel weist der Verankerungs- oder Befestigungskörper 11 rückseitig einer mit einer entsprechenden Gegenausbildung des Rahmens 9 zusammenwirkende schwalbenschwanzförmige Gestaltung zur Festlegung am Rahmen 9 auf. Es versteht sich jedoch, daß es hierauf nicht ankommt sondern daß der Verankerungs- oder Befestigungskörper 11 auch auf andere Weise, z.B. durch Nieten, Schrauben, Kleben mit dem Rahmen 9 verbunden werden kann. Hingegen ist es wesentlich, daß der Verankerungs- oder Befestigungskörper 11 mit einer randseitigen, längsdurchlaufenden Spaltabdecklippe 13 einstückig und materialeinheitlich ausgebildet ist, wobei die konstruktive Anordnung so getroffen ist, da der Verankerungs- oder Befestigungskörper 11, wie dargestellt, ein im wesentlichen L-förmiges Querschnittsprofil erhält. Durch die Spaltabdecklippe 13 wird der Spalt zwischen z.B. Rahmen 9 und Tür 4, 5 schon weitgehend geschlossen.

Der Dichtkörper 12 besteht nach Fig. 3 aus einem Verbindungssteg 14, dessen einer Längsrand am freien Endbereich der Spaltabdecklippe und dessen anderer Längsrand an der Basis des Verankerungs- oder Befestigungkörpers 11 von der Spaltabdecklippe 13 beabstandet und unter Bildung eines Hohlraums 15 angeordnet ist. Da der Verbindungssteg 14 schräg nach hinten verläuft, erhält der Hohlraum 15 eine angenähert dreieckförmige Querschnittsöffnung. Der Dichtkörper 12, der wie dargelegt lediglich aus einem Verbindungssteg 14 besteht, weist eine längsdurchlaufende Hohlkehle 16 auf. Zweckmäßigerweise sind Verankerungs- oder Befestigungskörper 11 und Dichtkörper 12 durch Koextrusion einstückig ausgebildet.

In Fig. 3 ist von der Seitentür 4, 5 lediglich der obere Stirnkantenbereich, der die mit dem Dichtkörper 12 zusammenwirkende Profilierung 10 aufweist, gezeigt. Die Profilierung 10 wird durch eine Hohlkehle 17 und durch einen schräg nach oben und außen weisenden Materialsteg 18 gebildet. Aus Fig. 3 ist weiterhin die Dichtungsanordnung für den Spalt zwischen einem Türrahmen und einer Fahrzeugtür erkennbar. Die Fahrzeugtür, deren Schwenkweg durch den Doppelpfeil 19 angedeutet ist, befindet sich hier im geschlossenen Zustand und der Hohlraum 15 ist evakuiert bzw. steht nicht unter Überdruck. Wird nun über den Luftanschluß 20 (Fig. 2) ein Überdruck in dem Hohlraum 15 aufgebaut, so dehnt sich der Dichtkörper 12 bis zur formschlüssigen Anlage an der Profilierung 10 aus, indem er in die Hohlkehle 17 eingreift und sich gegen den Materialsteg 18 abstützt. Dadurch wird die Tür, auch bei hohen Geschwindigkeiten am Abheben gehindert, zumal aufgrund der Dichtkörper-Konfiguration der Dichtkörper 12 in Türschließrichtung wirkt. Durch die Spaltabdecklippe 13 ist der Dichtkörper 12 daran gehindert, aus dem Türspalt heraus nach außen gequetscht zu werden.

Für das Aufblasen und Entlüften, ggf. Evakuieren des Dichtkörpers 12 über den Luftanschluß 20 werden bekannte Einrichtungen und Verfahren eingesetzt, die hier nicht näher erläutert werden müssen. Wichtig ist, daß der Hohlkörper 15 beim Fahrbetrieb und auch in der Parkstellung unter Überdruck steht, während er zum Öffnen und Schließen einer Fahrzeugtür entlüftet ist.

Fig. 2 zeigt also eine Dichtprofilleiste 8, deren Aufbau anhand von Fig. 3 im einzelnen erläutert wurde. Es ist noch zu erwähnen, daß die Enden 21 der Dichtprofilleiste 8 z.B. durch Vulkanisation oder durch Klebung dicht verschlossen ausgebildet sind und daß auch der Luftanschluß 20 in ebensolcherweise dicht mit der Dichtprofilleiste 8 verbunden ist. In Fig. 2 ist die Dichtprofilleiste 8 in der Einbauposition für eine Anordnung nach Fig. 1 gezeigt. In der Praxis liegt sie allerdings im wesentlichen geradlinig vor, da sie aufgrund ihrer Gestaltung, insbesondere auch wegen der geringen Höhe ihrer Spaltabdecklippe 13 sehr flexibel ist und auch um kleine Radien gebogen werden kann. In Fig. 4 und 5 ist deshalb gezeigt, daß die Dichtprofilleiste 8 auch eine Anordnung an einem Türrahmen (Fig. 4) oder auch eine Anordnung an einer Fahrzeugtür (Fig. 5) finden kann.

## Patentansprüche

1. Dichtungsanordnung für den Spalt zwischen einem eine Ausnehmung im Aufbau eines Fahrzeugs begrenzenden Rahmen (9) und einer an diesem mittels mindestens eines Scharniers schwenkbar angelenkten Abdeckung, insbesondere Tür (4, 5), unter Verwendung einer aus Gummi oder Kunststoff bestehenden Dichtprofilleiste (8), die an einem der beiden den Spalt begrenzenden Teile (9, 4, 5) befestigt ist und einen relativ hart ausgebildeten Verankerungs- oder Befestigungskörper (11) sowie zumindest einen damit verbundenen relativ weich und elastisch ausgebildeten Dichtkörper (12) aufweist, welcher dicht verschlossen ist, über einen mit einer Druckquelle verbundenen Luftanschluß (20) verfügt und bei geschlossener Abdeckung derart aufblasbar ist, daß er gegen eine am anderen Teil vorgesehene Dichtfläche gepreßt wird, dadurch gekennzeichnet, daß der Verankerungs- oder Befestigungskörper (11) ein im wesentlichen L-förmiges Querschnittsprofil aufweist, dessen kurzer Schenkel eine Spaltabdecklippe (13) bildet, daß der Dichtkörper (12) weitgehend verborgen und damit gegen mechanische Beschädigung geschützt hinter der Spaltabdecklippe (13) angeordnet ist und aus einem Verbindungssteg (14) besteht, von dem der erste Längsrand am freien Endbereich der Spaltabdecklippe (13) und der zweite Längsrand an der Basis des Verankerungs- oder Befestigungskörpers (11), von der Spaltabdecklippe (13) beabstandet und unter Bildung eines Hohlraums (15) mit angenähert dreieckförmiger Querschnittsöffnung angeordnet ist, und daß dem Verbindungssteg (14) eine am anderen Teil vorgesehene Profilierung (10) mit einer rückseitig von einem Materialsteg (18) begrenzten Hohlkehle (17) gegenübersteht, in die der Dichtkörper (12) einzugreifen vermag, wenn der Hohlraum (15) mit Überdruck beaufschlagt wird, um durch den Dichtkörperdruck die Abdeckung (Tür 4, 5) in Richtung Schließstellung zu belasten.

2. Dichtungsanordnung nach Anspruch 1, dadurch gekennzeichnet, daß der Verbindungssteg (14) mit mindestens einer längsdurchlaufenden, in den Hohlraum (15) eindringenden Falte oder Hohlkehle (16) ausgebildet ist.

3. Dichtungsanordnung nach Anspruch 1 oder 2, dadurch gekennzeichnet, daß der Dichtkörper (12) mit dem Verankerungs- oder Befestigungskörper (11) durch Kleben, Schweißen oder Vulkanisieren stoffschlüssig verbunden ist.

4. Dichtungsanordnung nach Anspruch 1 oder 2, dadurch gekennzeichnet, daß die Dichtprofilleiste (8) als einstückiges Koextrusionsprofil ausgebildet ist.

5. Dichtungsanordnung nach einem oder mehreren der Ansprüche 1 bis 4, dadurch gekennzeichnet, daß sich bei seitlichen Fahrzeugtüren (4, 5) die Dichtprofilleiste (8) von der Windschutzscheibensäule (2) bis zur Heckscheibensäule (7), oberhalb der Schloß-Scharnier-Achse durchlaufend erstreckt und daß der z.B. mit der Druckleitung einer Zentralverriegelung in Verbindung stehende Luftanschluß (20) im Bereich der Fahrzeugmittensäule (6) mit dem Dichtkörper (12) verbunden ist.

6. Dichtungsanordnung nach einem oder mehreren der Ansprüche 1 bis 5, dadurch gekennzeichnet, daß bei einer Seitentür (4, 5) die Türstirnfläche umlaufend die Dichtprofilleiste (8) trägt und das Rahmenblech umlaufend mit der Gegenprofilierung (10) versehen ist, wobei der Luftanschluß (20) im Scharnierbereich mit dem Dichtkörper (12) verbunden ist und wobei die Dichtprofilleistenenden gegeneinandergesetzt und z.B. über eine Stoßvulkanisationsstelle dicht miteinander verbunden sind.

7. Dichtungsanordnung nach einem oder mehreren der Ansprüche 1 bis 5, dadurch gekennzeichnet, daß bei einer Seitentür (4, 5) das Rahmenblech umlaufend die Dichtprofilleiste (8), deren Enden dicht miteinander verbunden sind, trägt und die Türstirnfläche umlaufend mit der Gegenprofilierung (10) versehen ist.

## Claims

1. An arrangement for sealing the gap between a frame (9) bounding a recess in a vehicle body and a cover, especially a door (4, 5), pivoted to the frame by at least one hinge, using a rubber or plastics sectional sealing strip (8) which is secured to one of the two parts (9, 4, 5) bounding the gap and comprises a relatively hard anchoring or securing member (11) and at least one relatively soft and resilient sealing member (12) connected thereto, the sealing member being tightly closed and connected to an air connection (20) connected to an air source and, when the cover is closed, the sealing member is inflatable so as to be pressed against a sealing surface provided on the other part, characterised in that the anchoring or securing member (11) has a substantially L-shaped cross-section, the short arm of which forms a gap-closing lip (13), that the sealing member (12) is disposed behind the gap-closing lip (13) so as to be substantially hidden and thus protected from mechanical damage, and comprises a connecting web (14), the first longitudinal edge of which is disposed on the free end region of the gap-closing lip (13) whereas the second longitudinal edge is disposed at the base if the anchoring or securing member (11) and at a distance from the gap-closing lip (13) so as to form a cavity (15) having an approximately triangular cross-sectional interior and that the connecting web (14) is disposed opposite profiling (10) on the other part and formed with afurrow (17) bounded by a web of material (18) and in which the sealing member (12) can engage when the cavity (15) is pressurised, so that the pressure of the sealing member urges the cover (door 4, 5) towards the closed position.

2. A sealing arrangempnt according to claim 1, characterised in that the connecting web (14) has at least one longitudinal fold or channel (16) which extends into the cavity (15).

3. A sealing arrangement according to claim 1 or 2, characterised in that the sealing member (12) is made of the same material and connected to the anchoring or securing member (11) by adhesion, welding or vulcanising.

4. A sealing arrangement according to claim 1 or 2, characterised in that the sectional sealing strip (8) is a one-piece co-extruded section member.

5. A sealing arrangement according to one or more of claims 1 to 4, charateised in that in the case of vehicle side doors (4, 5), the sectional sealing strip (8) extends continuously from the windscreen column (2) to the rear window column (7) above the lock-hinge axis, and the air connection (20), which is connected e.g. to the pressure lie of a central locking system, is connected to the sealing member (12) in the neighbourhood of the central column (6) of the vehicle.

6. A sealing arrangement according to one or more of claims 1 to 5, characterised in that in the case of a side door (4, 5), the sectional sealing strip (8) is disposed around the door face and the co-operating profiling (10) is disposed around the frame plate, the air connection (20) being connected to the sealing member (12) in the hinge region and the ends of the sectional sealing strip being disposed opposite one another and interconnected in sealing-tight manner, e.g. by butt vulcanisation.

7. A sealing arrangement according to one or more of claims 1 to 5, characterised in that in the case of a side door (4, 5), the sectional sealing strip (8), the ends of which are tightly interconnected, is disposed around the sheet metal frame and the co-operating profiling (10) is provided round the door face.

## Revendications

1. Joint d'étanchéité, pour l'interstice entre un cadre (9) délimitant un évidement dans la carrosserie d'un véhicule, et un recouvrement articulé, pivotant sur ce cadre au moyen d'une charnière, en particulier une portière (4,5), utilisant une bande profilée d'étanchéité (8) en caoutchouc ou en matière synthétique, qui est fixée sur l'une des deux parties (9,4,5) délimitant l'interstice, et un corps d'ancrage ou de fixation (11), relativement dur, ainsi qu'au moins un corps d'étanchéité (12) lui étant relié et relativement souple et élastique, qui est refermé de façon étanche, qui dispose d'un rarcordement d'air (20) relié à une source de pression et qui, lorsque le revêtement est fermé, est gonflable de telle façon qu'il soit pressé contre une surface d'étanchéité prévue sur l'autre partie, caractérisé en ce que le corps d'ancrage ou de fixation (11) présente un profilé à section transversale sensiblement en forme de L, dont la branche courte forme une lèvre de couverture d'interstice (13), de sorte que le corps d'étanchéité (12) soit largement caché et ainsi protégé contre tout endommagement mécanique, derrière la lèvre de couverture d'interstire (13), et se compose d'une nervure de liaison (14), dont la première bordure longitudinale est disposée sur la zone d'extrémité libre de la lèvre de couverture d'interstire (13) et la deuxième bordure longitudinale est disposée sur la base du corps d'ancrage ou de fixation (11), à l'écart de la lèvre de couverture d'interstice (13) et en formant un espace creux (15), avec une ouverture de section transversale à peu près triangulaire, et un profilage (10) doté d'une rainure creuse (17), délimitée en face arrière par une nervure de matériau, étant prévu sur l'autre partie, face à la nervure de liaison (14), rainure creuse (17) dans laquelle le corps d'étanchéité (12) peut s'introduire lorsque l'espace creux (15) est sollicité par une surpression, afin de solliciter en direction de la fermeture le recouvrement (portière 4,5), grâce à la pression du corps d'étanchéité.

2. Joint d'étanchéité selon la revendication 1, caractérisé en ce que la nervure de liaison (14) est réalisée avec au moins un pli ou une rainure creuse (16), s'étendant longitudinalement et pénétrant dans l'espace creux (15).

3. Joint d'étanchéité selon la revendication 1 ou 2, caractérisé en ce que la matière du corps d'étanchéité (12) est reliée à cella du corps d'ancrage ou de fixation (11), par collage, soudage ou vulcanisation.

4. Joint d'étanchéité selon la revendication 1 ou 2, caractérisé en ce que la banne profilée d'étanchéité (8) est réalisée sous forme d'un profilé de coextrusion, formé d'un seule tenant.

5. Joint d'étanchéité selon une ou plusieurs des revendications 1 à 4, caractérisé en ce que, sur les portières latérales (4,5) du véhicule, la bande profilée d'étanchéité (8) s'étend de façon continue, depuis le montant de pare-brise (2) jusqu'au montant de custode (7), au-dessus de l'axe charnière-serrure, et que le raccordement d'air (20), qui est par exemple relié à la conduite de pression d'un verrouillage central, est relié au corps d'étanchéité (12), dans la zone du montant central de véhicule (6).

6. Joint d'étanchéité selon une ou plusieurs des revendications 1 à 5, caractérisé en ce que, pour une portière latérale (4,5), la surface frontale de portière porte une bande profilée d'étanchéité (8) continue sur le pourtour et la tôle de cadre étant pourvue du contre-profilage (10), de façon continue sur le pourtour, le raccordement d'air (20) étant relié au corps d'étanchéité (12), dans la zone de charnière, et les extrémités de bande profilée d'étanchéité étant placées les unes en face des autres et reliées entre elles de façon étanche, par exemple par l'intermédiaire d'un point de vulcanisation en bout-à-bout.

7. Joint d'étanchéité selon une ou plusieurs des revendications 1 à 5, caractérisé en ce que, pour une portière latérale (4,5), la tôle de cadre porte, de façon continue sur le pourtour, la bande profilée d'étanchéité (8), dont les extrémités sont reliées entre elles de façon étanche, et la surface frontale de porte étant pourvue du contre-profilage (10), de façon continue sur le pourtour.

Fig. 1

Fig. 2

Fig. 4

Fig. 5

Fig. 3